# EUROPEAN PATENT SPECIFICATION

(11) **EP 3 170 023 B1**
(45) Date of publication and mention of the grant of the patent: **04.11.2020**
(21) Application number: 15822034.3
(22) Date of filing: 05.07.2015
(51) Int. Cl.: G01S 17/02, G01S 17/48, G01S 17/58

(54) **OBJECT DETECTION SYSTEM**
OBJEKTERKENNUNGSSYSTEM
SYSTÈME DE DÉTECTION D'OBJETS

(30) Priority: 17.07.2014 IL 23371114
(43) Date of publication of application: 24.05.2017
(73) Proprietor: Rafael Advanced Defense Systems Ltd, 3102102 Haifa (IL)
(72) Inventor: LAVI, Dov, 3476001 Haifa (IL)
(74) Representative: Hoeger, Stellrecht & Partner Patentanwälte mbB
(86) International application number: PCT/IL2015/050694
(87) International publication number: WO 2016/009422

(56) References cited:
- US-A1- 2014 168 633
- US-A1- 2014 168 633
- US-B2- 7 944 549

## Description

### Field of Invention

The present invention relates to a system for the detection and determination of the moving properties of an incoming flying or moving object, approaching towards a target, which may be a stationary structure or a moving platform on the ground, in the air or at sea. The invention employs one or more optical curtains.

### Background of the Invention

The system of the present invention serves as an indispensable part of a warning or protection system against intrusion or hit by an incoming flying object. In order to accomplish its purpose efficiently, the detection system must fulfill the following conditions:
(a) Detect an intrusion of an incoming flying object into a predefined region in space around the protected target;
(b) Identify the point of intrusion in three dimensions in space;
(c) Identify the trajectory in space of the incoming object;
(d) Make a reliable estimate relating to the velocity of the incoming object;
(e) Be immune to disturbances caused by the radiation of the sun or any other external source of radiation, natural or artificial;
(f) Operate reliably under adverse weather conditions;
(g) Discriminate between several incoming objects by their size and orientation;
(h) Have a minimal false alarm rate (FAR).

Detection units of the optical type typically utilize a so called "optical curtain" at some distance in front of the target's wall. Hereinafter, the term "target" relates to a stationary structure or a moving platform on the ground, in the air or at sea. The optical curtain is typically a region in space, approximating a planar or curved surface, which is irradiated by one or more laser transmitters or by any other light sources (for example, LEDs) that can be temporally modulated at high frequency, relative to the frequency of changes in background radiation. The optical curtain has a generalized form of a "fan", being as wide as necessary in a tangential plane while being relatively thin (in the order of a single instantaneous field-of-view of an optical receiver) in the radial direction. An intrusion into the optical curtain by an approaching object causes a reflection or scatter of light, which is sensed by one or more optical receivers. The receivers convey their respective signals to a processing unit, which in turn calculates one or more of the following parameters: (a) the location of intrusion into the optical curtain; (b) the trajectory of the object; and (c) the velocity of the object.

US 6,396,577 discloses a Lidar-based air defense system for detecting, tracking and even destroying airborne objects. The system comprises plurality of laser transmitters, each transmitter contributes a single laser ray to an optical curtain. Pluralities of laser receivers are also provided to sense reflection or scatter from the optical curtain resulting from the object's intrusion. A processing unit is also provided to calculate one or more of the above-mentioned parameters (i.e., the location of intrusion of the object into the optical curtain, and the object's velocity or trajectory.

US 7,944,549 (corresponding to IL 167932) entitled "Optical Screen, Systems and Methods for Producing and Operating Same" discloses a system for forming an optical screen, which comprises one or more laser transmitters and one or more optical receivers. IL 167932 also describes the production of an optical screen from a single transmitter. Each optical receiver of IL 167932 includes an array of optical detectors. While IL 167932 shows in its drawings a one dimensional array, it never discusses use of a two dimensional array, nor does it teach any advantage which can be obtained by using such a two dimensional array rather than using the shown one dimensional array. While Fig. 4 of US 7,944,549 shows an arrangement having one transmitter and one receiver, still this arrangement cannot determine a location of an object intrusion into the curtain in three dimensions (i.e., two coordinates defining the location of intrusion into the curtain, assuming that the coordinates defining the surface of the curtain itself are known). Furthermore, this cannot be done even assuming that IL 167932 uses a two dimensional array, unless a parallax is provided between the plane of the receiver's array and the plane of the optical screen. However, IL 167932 remains totally silent with respect to this parallax condition. Furthermore, when IL 167932 discloses a manner of forming an optical screen, it still remains silent on how to adapt such optical screen for the protection of an object such as a moving platform, while considering all the specific problems associated with such moving platform protection application.

In another aspect, one problem which is associated with the operation of a detection system outdoors relates to the solar radiation, or any other external source of radiation, natural or artificial. When the solar radiation hits the ground or any natural or artificial object, clutter is caused, that may be falsely considered by the system as an intrusion. Moreover, the shadow of the threat produced by the sun radiation or by the laser transmitter radiation may also be falsely considered by the system as an intrusion.

Furthermore, while protecting a target, there are several irrelevant regions for which activation of the warning or protection system is undesirable and should preferably be avoided. For example, an object which approaches the target in a direction or at a location which is not of interest may generally be ignored. Therefore, it is also highly desirable to provide an optical type detection system which can distinguish to a high degree between locations that are relevant for warning/protection and those locations that are irrelevant. As will be demonstrated hereinafter, the definition of said locations that are irrelevant for warning/protection in fact involves definition of irrelevant locations within the optical curtain.

US 2014/168633 A1 discloses a terrain surveillance system.

US 4,788,439 discloses the use of adjacent "guard detectors" in order to overcome the adverse effect of fog, clouds or other aerosols on the signal of the "target detectors". The "guard" and "target" detectors are alternately positioned next to one another along a straight line, i.e., they form a one-dimensional linear array. There is provided a laser transmitter operating in a continuous mode, which irradiates the object to be detected, as well as the aerosol particles. The signal received in the "guard detectors" from the aerosols is subtracted from the signal received in the "target detectors" in order to improve the signal-to-noise ratio at the "target detectors". There are, however, several important differences between US 4,788,439 and the present invention. The transmitter in US 4,788,439 operates at a continuous-wave mode, while the present invention cancels effects arising from the solar radiation while operating in a pulsed mode. As a result, background subtraction in US 4,788,439 is done spatially between two adjacent detectors, whereas, as will be shown, in the present invention the subtraction is performed pixel-by-pixel between two time-consecutive frames of the same spatial region. As a result, the system of the present invention enables much more detailed, powerful and effective background subtraction compared to US 4,788,439.

It is an object of the present invention to provide a detection system for protecting a target (a moving platform or a stationary structure) which is more compact compared to similar prior art systems.

It is another object of the invention to provide a detection system which overcomes the effects of solar radiation and associated clutter and shadows, and is thereby much less prone to the resulting false alarms.

It is still another object of the present invention to provide a detection system in which regions that are irrelevant for protection can be pre-defined, while objects that intrude the optical curtain at said irrelevant regions are ignored and do not cause any activation of the warning or protection system.

Other objects and advantages of the invention will become apparent as the description proceeds.

### Summary of the Invention

The present invention relates to an optical system for the detection of a flying or moving object approaching a target, as defined in claim 1.

Preferably, a size of the target protected area is commensurate with the curtain area which is covered by said focal plane array field of view.

Preferably, each of said processing units is positioned within transmitter-receiver set respectively.

Preferably, one or several of said processing units are positioned external to said transmitter-receiver sets.

Preferably, the shape of said curtain coverage area is designated at the receiver by means of selecting active and inactive pixels within said focal plane array.

Preferably, one or more transmitter-receiver sets are provided along said target wall, each of said sets producing two optical curtains, one in front of the other, and wherein one or more receivers within said set cover respectively said two curtains, and wherein said one or more processing units determine a velocity and trajectory of said intruding object by means of processing two intrusion locations within said two optical curtains respectively, and the elapsed times between said two intrusions.

Preferably, the transmitter operates in a continuous wave manner.

Preferably, the transmitter operates in pulsed manner.

Preferably, said transmitter operates in an alternating OFF-ON manner, and wherein said receiver accumulates light during R-determination periods, which are determination periods in which the level of the charge due to sun radiation only in each pixel of the FPA is respectively determined, and I-determination periods, which are determination periods in which the level of the accumulated charge due to transmitter illumination + solar radiation in each pixel of the FPA is respectively determined, respectively, and wherein the effects of back scatter due to solar or any other external source of radiation are eliminated by subtracting from a signal accumulated during an I-determination period a respective signal which was accumulated during a previous R-determination period.

Preferably, each of said I-determination periods and said R-determination periods are of equal time.

Preferably, each of said I-determination periods and said R-determination periods are of unequal time.

Preferably, the pulse duration and the pulse repetition rate are selected based on the expected rate of changes in a background clutter, and based on the expected possible velocities of said flying object.

Preferably, said one or more transmitters are laser transmitters in a specific laser spectrum, and said one or more receivers are sensitive to light in said laser spectrum.

Preferably, the illumination of said optical curtain allows sensing an approach of said expected flying object, considering its expected dimensions.

Preferably, said fan-like optical curtain is composed of discrete rays that are spatially dense enough to sense an approach of said expected flying object, considering its expected dimensions.

Preferably, the size and orientation of the intruding object are measured according to the response of the respective pixels illuminated by reflected or scattered radiation from the intruding object.

### Brief Description of the Drawings

In the Drawings:
- Fig. 1 shows a detection set which is used for warning or protection of a structure or a platform, according to an embodiment of the invention;
- Fig. 2 shows a sectional view along the optical axis of the receiver's field-of-view of Fig. 1, with an additional enlarged view of the receiver's focal plane array (FPA), and a representation of the transmitter;
- Fig. 3 shows a typical arrangement of a transmitter-receiver pair at the wall of the protected target;
- Fig. 4A shows in schematic form the receiver's focal plane array (FPA);
- Fig. 4B shows the principle of a range identification of an intrusion point;
- Fig. 4C shows two views of a 3D range identification of an intrusion point;
- Fig. 5A illustrates the manner by which a trajectory and a velocity of an intruding object are determined;
- Fig. 5B shows a deployment of several optical curtains around a target perimeter;
- Fig. 6 shows a manner by which irrelevant regions are excluded from the receiver's field of view, and in fact provides shaping of the curtain;
- Fig. 7 describes in a graphical form how signals resulting from solar radiation or back scattering resulting from other light sources are subtracted from the receiver's signal;

### Detailed Description of Preferred Embodiments

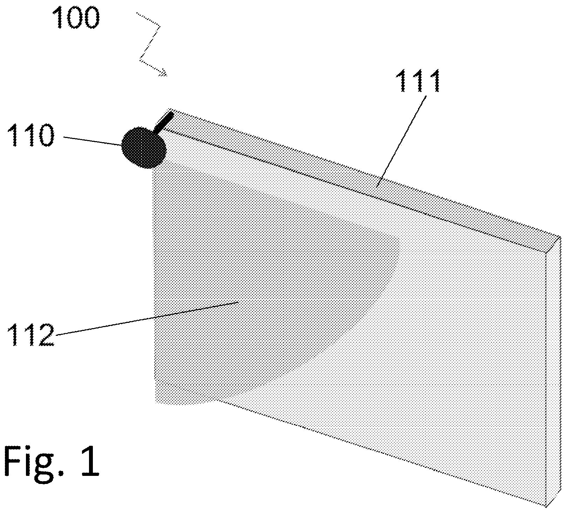

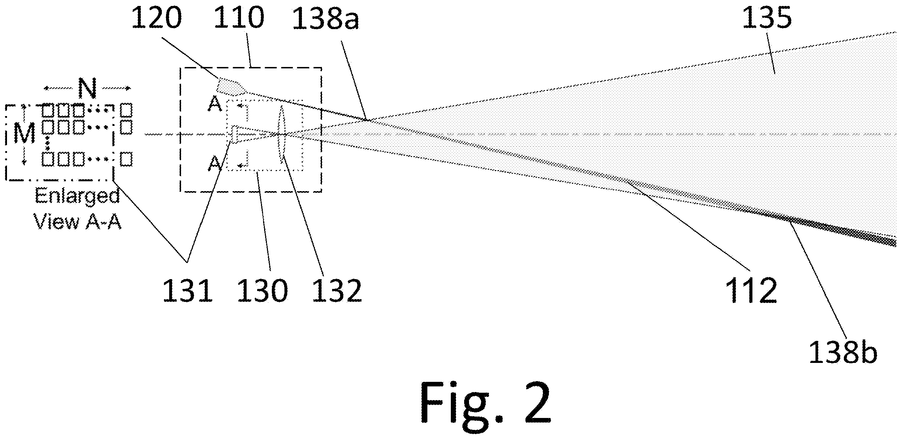

Fig. 1 shows a detection set 100 which is used for warning or protection of a structure or a platform, according to a first embodiment of the invention. A set 110 of a light transmitter and an optical receiver (shown in Fig. 2) is provided at one side of wall 111 of the structure or platform. A light transmitter which is positioned within a transmitter-receiver set 110 produces a light curtain 112 (which may be planar, as specifically shown in Fig. 1, or curved) in a manner well known in the art. More specifically, the laser or light transmitter comprises a single laser or light source, together with a beam shaping element (for example, a cylindrical lens) for producing said planar or curved optical curtain 112. The planar light curtain can alternatively be created by any other optical system, for example by using several light sources adjacent to each other and focused to a certain distance, and creating the planar or curved surface by using the natural light divergence of these sources.

Preferably (but not necessarily), the optical curtain is "positioned" to be in a plane substantially parallel to wall 111.

Fig. 2 generally illustrates the relation between the optical curtain 112, and the field of view of the receiver. The receiver 130 of the transmitter-receiver set 110 comprises a two dimensional focal plane array 131 (hereinafter: FPA), which is sensitive to light in the same light spectrum of the transmitter 120. A lens 132 is located in front of the focal plane array, to provide the focal plane array 131 a field of view 135 which covers at least a portion (between points 138a and 138b) of the entire area of the optical curtain 112. Two important characteristics are associated with the mutual layout of the elements of the transmitter-receiver pair 110: (a) The focal plane array is positioned at a location which is somewhat spaced apart from the plane of the optical curtain 112; and (b) The optical axis of the focal plane array 131 and the plane of the optical curtain 112 are not parallel. The combination of said characteristics (a) and (b) in fact forms a parallax between the field of view of the two dimensional array 131 and the optical screen 112. An important consequence of the parallax is that the region in space, in which the reflected or scattered radiation from the intruding object will produce a signal in the receiver, is limited to the intersection zone of the optical curtain 112 and the receiver field-of-view 135.

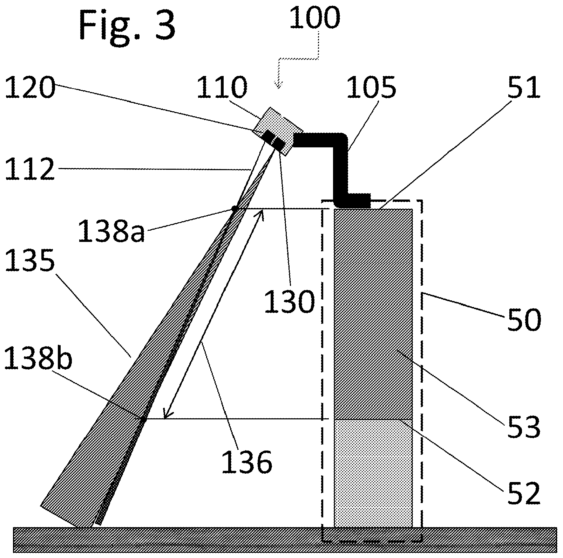

Fig. 3 generally illustrates a typical arrangement of detection set 100 of the invention, as applied to a structure or a platform 50. The transmitter-receiver set 110 is affixed to a proximal end of support 105, which is in turn attached at its distal end to the roof of structure or platform 50. The planar or curved light curtain 112 is produced by light transmitter 120. The beam width in cross section of the curtain should be thinner than a single instantaneous field-of-view (hereinafter IFOV) of the optical receiver 130. The field of view 135 of the two dimensional focal plane array 131 (not shown in Fig. 3) of receiver 130 is selected such that the intersection between the optical curtain and said field of view produces at least a partial overlap. Said overlapping section 136 between the field of view of the focal plane array and the optical curtain in fact produces an effective area of curtain 112. The reception by said focal plane array of a view of said effective area becomes possible due to said two "parallax" characteristics: (a) The focal plane array is positioned somewhat spaced apart from the plane of the optical curtain 112; and (b) The optical axis of the focal plane array 131 and the plane of the optical curtain 112 are not parallel. As mentioned, the field of view of the focal plane array is selected such that it overlaps at least partially with said optical curtain. More specifically, said overlap should preferably include the optical curtain area which fully "covers" (i.e., protects) the important or sensitive area 53 of the entire wall 111 of the structure or platform, while not "covering" the space above the roof 51, or optionally below the plane 52 (assuming the regions above roof 51 and below plane 52 should not be protected). In one embodiment, the width of the field of view of each pixel of the focal plane array shall be at least larger than the thickness of the light curtain.

It should be noted that, while the optical curtain in Fig. 3 is pointing generally downwards, this need not always be the case. If the intruding object is expected to approach from a different direction, the optical curtain may be arranged such that it points, for example, upwards or sidewise, as the need may be.

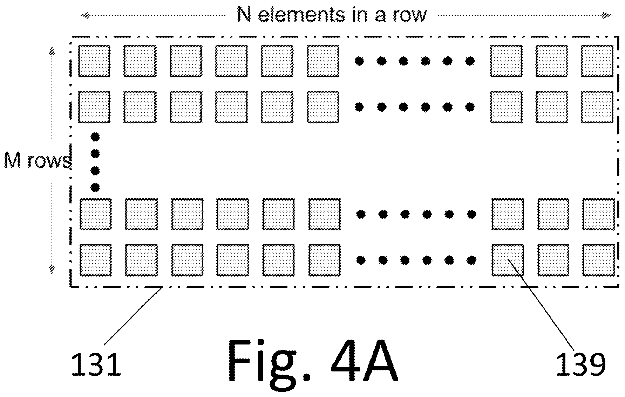

Fig. 4A illustrates the general structure of a focal plane array, having M rows and N elements in each row, i.e., M×N elements 139.

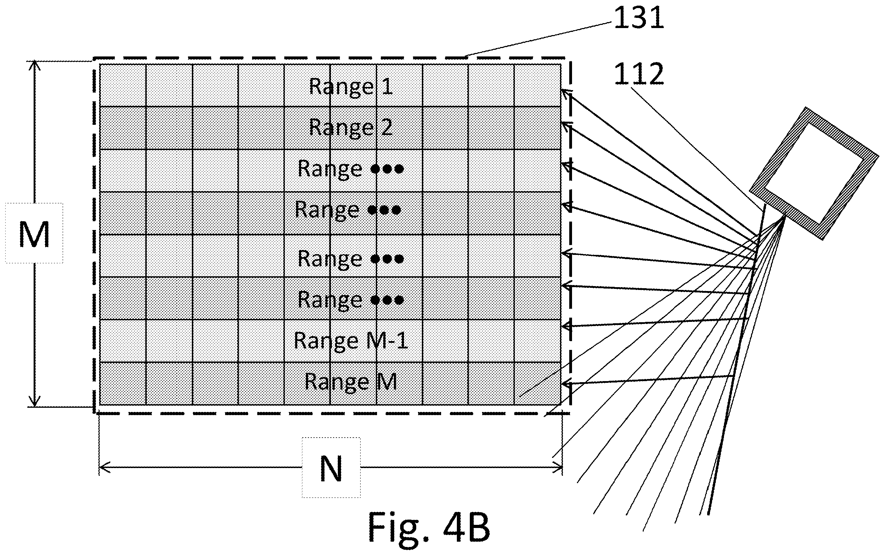

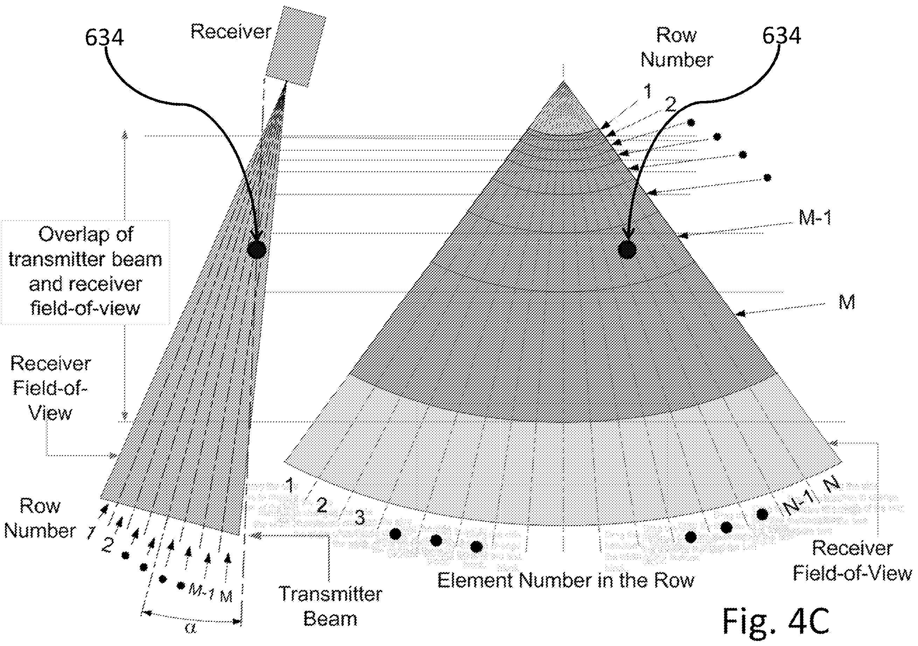

Fig. 4B is similar to Fig. 3, however, it shows the effect of inclusion of M rows within the focal plane array 131. In this specific case, the effective length (136 in Fig. 3) of the curtain area is divided respectively to M distinct ranges; each of said ranges is covered by a respective row of the focal plane array 131. As shown in Fig. 4C, in view of the expansion of the intersection area between the field of view of the focal plane array and the optical curtain, as the range from the receiver increases, the sizes of the various portions of the curtain that are covered by each row respectively are not the same. More specifically, row 1 covers a smallest curtain area, while row M covers the largest curtain area. As shown in the top view at the right-hand side of Fig. 4C, the width of the optical curtain (i.e., the angular coverage of the fan-shaped curtain) is divided into N (equal or unequal) angular sectors, each corresponding to one column of detectors from the N columns of detector elements of the focal plane array 131. Therefore, in fact each portion within the effective curtain area is "assigned" with a specific element (i.e., pixel) of the focal plane array, although the portion size of the effective curtain which is assigned respectively to each of the elements within the focal plane array is not the same (the respective portion size increases as the distance from the FPA element to the respective intersection point with the curtain increases). In such a manner, an intrusion of object 634 into the optical curtain will only affect specific pixels of the focal plane array 131, and knowledge of the affected pixels in fact can lead to the exact knowledge of the location of intrusion.

As shown, when an object intrudes the optical curtain at a specific location, a scatter or reflection occurs, which in turn arrives and affects respectively one or more pixels of the FPA. Knowledge of the affected pixel (or pixels) can easily lead to the exact location of intrusion. The number of pixels responding to radiation reflected or scattered from the intruding object gives an estimate of its size and orientation within the receiver's field-of-view. The more pixels there are in the focal plane array, the better the resolution of the object's size and orientation.

The system of the invention may operate in its basic form with a light transmitter operating in a continuous wave mode. More specifically, in its basic form the system of the invention can detect the coordinates of the object penetration within the screen. However, and particularly in order to eliminate the adverse effect of the sunlight on the reliability of detection, operation in a pulse mode is much preferable. Furthermore, while operating in its basic form, the invention does not require synchronization between the transmitter and the receiver. On the other hand, when operating in a pulse mode of operation which enables elimination of the adverse effects of the sun radiation, synchronization is typically required.

When the light transmitter 120 operates in a pulse mode, consideration should be given to the light pulse duration and to the light pulse repetition. More specifically, the pulse duration and the pulse repetition should be selected based on the expected rate of changes in the background clutter. As will be further elaborated hereinafter, the system must distinguish between reflections that result from the movement of the intruding object and reflections that result from the pseudo "movement" of other objects that are substantially stationary such as stones on the ground, bushes and natural plants, etc. that may be seen as moving objects when the platform is moving. Furthermore, the system must cancel the effects of backscatter, i.e., reflections from particles in the air (dust, water particles, etc.). Therefore, in order to distinguish between those two types of objects (intrusion of a real object vs. effects due to backscatter and "background" objects), the system of the invention prefers operation with shorter-duration pulses, and higher repetition rate.

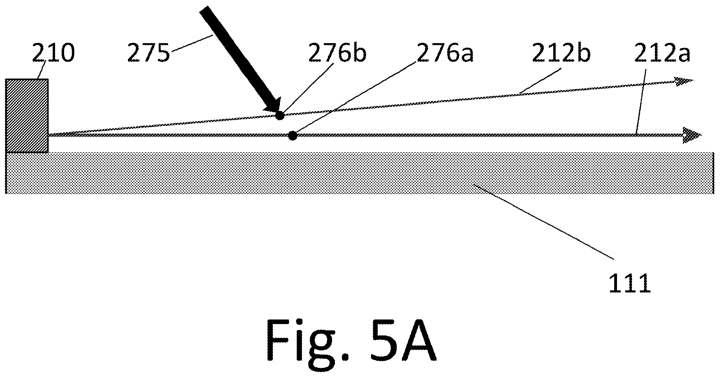

In still another embodiment of the invention, the system may comprise two or more optical curtains, rather than one. Fig. 5A shows a top view of the structure or platform wall 111, which is provided with a set 210 of two light transmitters and one optical receiver (although this embodiment shows, for the sake of brevity, a common (single) receiver for receiving reflections or scatter from two curtains, in some embodiments two receivers may be used, each receiver individually handling each curtain respectively). The two light transmitters form two optical curtains 212a and 212b respectively as shown. When an object 275 intrudes the first curtain 212b, a scatter or reflection from said first curtain occurs and is received by the receiver (within set 210), and a first point of intrusion 276b is determined (two dimensions coordinates within the curtain, and in fact three dimensions coordinates in space, as the curtain coordinates, which is stationary relative to the structure, are known). Later on, when the same object protrudes the second curtain 212a, a second point of intrusion 276a is determined in a similar manner. The accurate knowledge of the coordinates of said two points of intrusion respectively, and the respective times of intrusions at each curtain, enables calculation of the object's trajectory, and its velocity. It should be noted again, that the point of intrusion within the curtain is determined based on the specific one or more pixels of the receiver's focal plane array that sense the object reflections.

While Fig. 5A shows a detection set with two optical curtains which is applied to protect a single wall of the structure or platform, similar detection sets may be provided to additional walls of the structure or platform, thereby to provide a full peripheral protection.

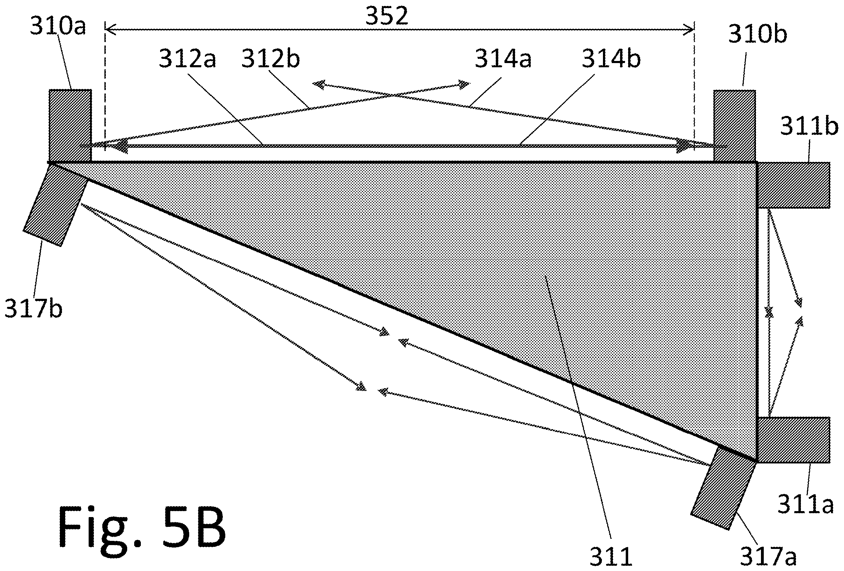

Fig. 5B shows still another alternative to the embodiment of Fig. 5A. In this case, the structure or platform 311 is protected by 6 detection sets (sets 310a, 310b, 311a, 311b, 317a and 317b) two detection sets for each wall of the structure or platform 311. In this case, each detection set (for example, sets 310a and 310b) independently protects the respective wall as before, while each set operating a pair of optical curtains respectively (for example, curtain pairs 312a-312b or 314a-314b respectively). Still, a central processing unit may process data from two separate detection sets, in order to provide a better detection and improved accuracy. Furthermore, some overlapping areas (such as area 352) may be provided between several curtains in order to improve the collection of data and to improve accuracy (in this specific case the overlapping area 352 indicates overlap between curtains 314b and 312a, both covering (at least partially) the same area. In such a manner, the accuracy of detection is improved in the overlapping area, as two curtains cover substantially a same area, while two respective receivers detect reflections (due to object intrusion) from two opposite directions respectively.

It should be noted that each (or some) of the protected walls may include more than two detection sets, in any desired spacing within the wall, in order to increase the overlapping areas and enhance the overall system performance.

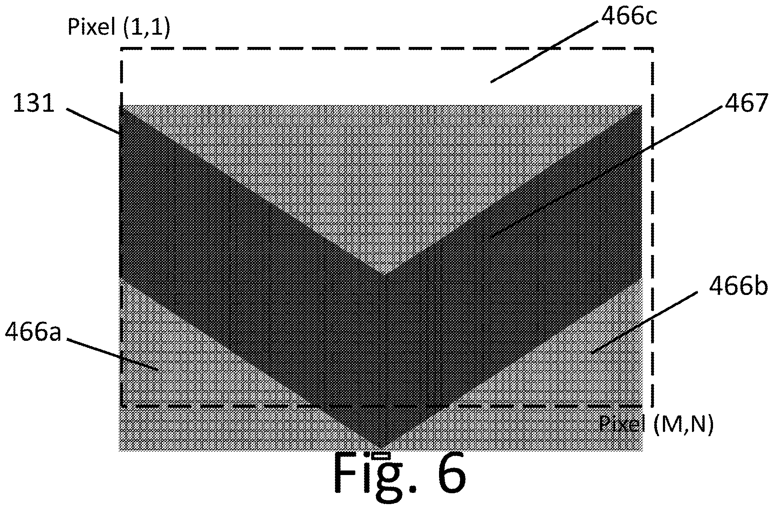

As previously discussed with respect to Fig. 3, an effective curtain area 136 is created based on the area of overlap between the optical curtain 112 and the field of view 135 of the receiver 130. This effective curtain area has a given shape which entirely depends on overlap between said curtain and said field of view. In some cases, however, a more complex shape of the effective optical curtain is desired. Fig. 6 illustrates a manner by which a complex effective shape of the optical curtain can be created. This is done by simply defining pixels within the FPA as irrelevant (i.e., pixels that should be ignored). Such a definition of said irrelevant pixels is in fact equivalent to a provision of a shaped optical curtain. For example, pixels within the areas 466a, 466b and 466c of FPA 131 are defined as irrelevant, while the rest of the pixels 467 of the FPA area are defined as relevant. In such a manner, the effective area of the optical curtain is in fact shaped based on the shape of the relevant area 467, as defined within the FPA. The same idea can be further extended into the definition of several regions of interest on the same FPA, each with a different shape according to a pre-defined geometry.

The optical curtain of the present invention, as discussed so far, and shown, for example in Fig. 1, is a fan-like, planar or curved, substantially continuous fan, whose illumination allows sensing an approach of an expected flying object, considering the object's expected dimensions. However, this form of the optical curtain has been given herein only as an example. In still another embodiment, the optical curtain may have a fan-like shape, while being composed of discrete rays that are spatially dense enough to sense an approach of an expected flying object, considering its expected dimensions.

As noted above, the system of the invention should distinguish between reflections from "background" objects (such as stones, bushes, plants, etc.) and reflections from "real" objects, i.e., flying objects that intrude the curtain and may endanger the platform. Said reflections from background objects may occur as a result of illuminations by the one or more of light transmitters, or as a result of reflections as a result of the solar radiation. Moreover, said background objects may be seen by the receiver as moving objects, due to the movement of the platform (assuming that the system is installed on a moving platform). If not treated appropriately, reflections from said natural objects may be wrongly interpreted by the receiver (and the processing unit) as resulting from "real" objects. As noted above, the invention determines, among others, the velocity of progression of the object, by comparing times of intersections of the object with two curtains respectively. The typical velocity of a "real" intruding object is generally significantly higher than the "velocity" of said natural objects (i.e., the relative velocity between the natural object and the moving platform). Therefore, when a velocity of an intruding object (whether "natural" or "real" object) is determined, the level of the velocity by itself can provide distinction with respect to its nature (i.e., whether the intruding object is "natural" or "real"). As said above, to apply this distinction the use of shorter pulses with relatively high repetition rate is preferable.

Another type of disturbance to the system lies in clutter within the medium of transmission, i.e., in the air at which the curtain is produced. In order to improve the reliability of the system, the elimination of the effect of reflections and scatter from clutter (such as, dust, water particles, etc.) within the medium of transmission is preferable. Said clutter reflections may result either from the illuminations from the one or more transmitters, or from the solar radiation. These clutter reflections are in fact "noise", which should be ignored. A solution to said problem, as provided by the system of the invention, is elaborated herein below.

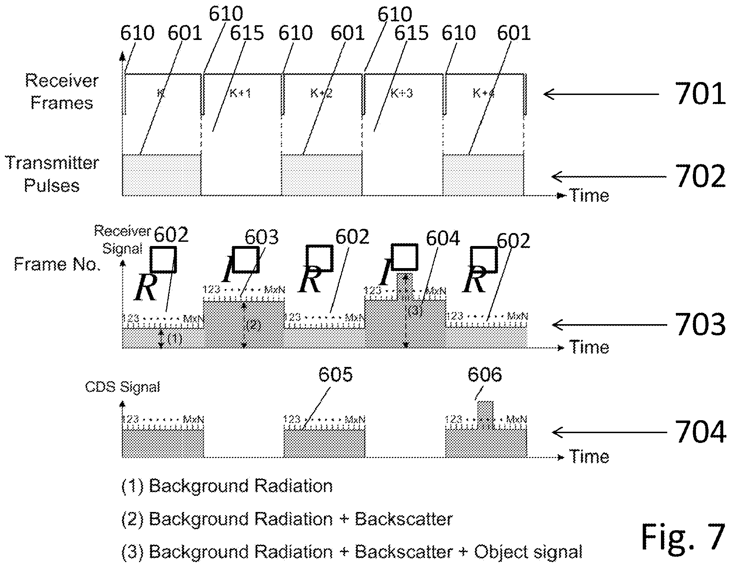

As noted above, the focal plane array periodically captures "frames" from the optical curtain. With reference to Fig. 7, graph 701 shows a manner by which the focal plane array (FPA) 131 operates. More specifically, plurality capacitive elements within the FPA (one capacitive element for each pixel, i.e., M×N capacitive elements) accumulate respectively charge during each frame period K, K+1, K+2..., etc. Although this exemplary discussion relates to a FPA with capacitive elements, other types of FPAs that do not include capacitive elements may be used instead. Transmitter illumination is provided during alternate times, i.e., during even frames of K, K+2, K+4, etc. as shown in graph 702, and in fact during said even periods both transmitter illumination and solar radiation are provided. During odd periods, i.e., during frames K+1, K+3, K+5..., etc., only solar (or background) radiation exists, as no transmitter illumination is provided. At the end of each frame period, and during a short emptying period 610, each of the capacitive elements is discharged, and a new frame period begins in a manner well known in the art. Following each discharge of the capacitive elements, the respective amount of charge in each pixel is determined respectively during a determination period. In fact, two types of determination periods exist, a first determination period which follows a transmitter illumination + solar radiation period, and a second determination period which follows solar radiation only, without transmitter illumination. The "solar radiation" is referred in Fig. 7 also as "background radiation".

Graph 702 shows the periods 601 in which transmitter illumination + solar radiation exist, each period 601 is followed by a period which will be hereinafter referred to as an I-determination period 615, i.e., a determination period in which the level of the accumulated charge due to transmitter illumination + solar radiation in each pixel of the FPA is respectively determined. Graph 702 also shows the periods 615 in which only solar radiation exists, each period 615 is followed by an R-determination period 601, i.e., a determination period in which the level of the charge due to sun radiation only in each pixel of the FPA is respectively determined.

Graph 703 shows the level of charge, as determined within the receiver in each period. More specifically, during each R-determination period 602, the level of charge (1) as accumulated during previous frames of solar radiation only is determined. Assuming that there was no "real" object penetration during said periods 602, this charge in fact results from the illumination effect on the backscatter (dust, water particles, etc. in the air) and background reflections of solar radiation. The level of charge (2) which is accumulated during I-determination period 603, in fact reflects charge accumulation due to the transmitter illumination + the background reflections and backscatter effect in view of the solar radiation as occurred during previous period. It can be seen that this level (2) is clearly higher compared to level (1) of the R-determination periods 602, as the reflection due to the background and backscatter is resulted from two types of illuminations, rather than due to the sun radiation alone.

The level of charge (3) which is accumulated during the I-determination period 604 reflects charge accumulation due to the transmitter illumination + due to the solar radiation as occurred during the previous period 602. It can be seen that this level (3) during period 604 is higher compared to levels (1) of the R-determination periods 602 and levels (2) of the I-determination period 603, as the level (3) results from background reflections due to both the solar radiation and the transmitter illumination, plus scatter and reflections due to penetration of an object into the optical curtain. It can be seen that the penetration of the object affects only a portion of the FPA pixels. More specifically, the I-determination signal in period 604 has two separate levels, as follows: (a) a level (2) during a part of the time similar to the I-determination signal 603 (resulting from the sun radiation + background reflections and backscatter due to the transmitter illumination), and level (3) resulting from the solar radiation+ background reflections and backscatter due to the transmitter illumination + reflection from the intruding object which occurred during the previous period K+2 (shown in Graph 701).

With reference to graph 704, and in order to eliminate the effect of the solar radiation, the present invention subtracts from each I-determination signal the previous R-determination signal. For example, signal 605 reflects subtraction of the R-determination signal 602 from the I-determination signal 603. Signal 606 in turn reflects subtraction of the R-determination signal 602 from the I-determination signal 604. It can be seen the resulting signal 606 in fact eliminates entirely the effects of solar radiation on the combined I-radiation signal. Moreover, the effect of the backscatter due to the transmitter illumination alone can also be eliminated from the signal by further subtracting the signal 605 from the result signal 606, leaving a signal which reflects the effect of the object intrusion alone.

As shown, in such a manner of subtracting R-determination signals from I-determination signals the effects of solar radiation can be eliminated. Furthermore, the fact that the R-determination signal occurs a very short period before the I-determination from which it is subtracted insures the reliability of the procedure, as in both signals the effect of solar radiation is substantially the same (given sufficiently fast pulse repetition rate of the transmitter).

## Claims

1. An optical system for the detection of a flying or moving object approaching a target, which comprises:
- one or more transmitter-receiver (110) sets positioned at an external surface of a wall of said target, each of said transmitter-receiver sets comprising:
a. a light transmitter (120) for creating a fan-like planar or curved continuous optical curtain in front of said wall of the target;
b. a receiver (130) which comprises a two-dimensional 2-D focal plane array (131), said focal plane array being spaced apart from said transmitter and being positioned at a plane not parallel to said optical curtain such that a field of view of said focal plane array covers at least a 2-D portion of the entire area of said optical curtain, and wherein any 2-D location at the covered area of the optical curtain corresponds to a specific 2-D location comprising of one or more pixels at said focal plane array; and
- one or more processing units for determining at least a location of intrusion of said flying or moving object to within said optical curtain by means of determining pixels within said focal plane array that are affected by reflections or scatter due to said intrusion of said flying or moving object.

2. System according to claim 1, wherein a size of the target protected area is commensurate with the curtain area which is covered by said focal plane array field of view.

3. System according to claim 1 wherein each of said one or more processing units is positioned within a transmitter-receiver set respectively.

4. System according to claim 1 wherein one or several of said processing units are positioned external to said transmitter-receiver sets.

5. System according to claim 1, wherein the shape of said curtain coverage area is designated at the receiver by means of selecting active and inactive pixels within said focal plane array.

6. System according to claim 1, wherein one or more transmitter-receiver sets are provided along said target wall, each of said sets producing two optical curtains, one in front of the other, and wherein one or more receivers within said set cover respectively said two curtains, and wherein said one or more processing units determine a velocity and trajectory of said intruding object by means of processing two intrusion locations within said two optical curtains respectively, and the elapsed times between said two intrusions.

7. System according to claim 1, wherein the transmitter operates in a continuous wave manner.

8. System according to claim 1, wherein the transmitter operates in pulsed manner.

9. System according to claim 8, wherein said transmitter operates in an alternating OFF-ON manner, and wherein said receiver accumulates light during R-determination periods, which are periods in which the level of the charge due to sun radiation only in each pixel of the focal plane array is determined, and I-determination periods, which are periods in which the level of the accumulated charge due to transmitter illumination and solar radiation in each pixel of the focal plane array is determined, respectively, and wherein the effects of back scatter due to solar or any other external source of radiation are eliminated by subtracting from a signal accumulated during an I-determination period a respective signal which was accumulated during a previous R-determination period.

10. System according to claim 9, wherein each of said I-determination periods and said R-determination periods are of equal time.

11. System according to claim 9, wherein each of said I-determination periods and said R-determination periods are of unequal time.

12. System according to claim 8, wherein the pulse duration and the pulse repetition rate are selected based on the expected rate of changes in a background clutter, and based on the expected possible velocities of said flying object.

13. System according to claim 1, wherein said one or more transmitters are laser transmitters in a specific laser spectrum, and wherein said one or more receivers are sensitive to light in said laser spectrum.

14. System according to claim 1, wherein the illumination of said optical curtain allows to sense an approach of said expected flying or moving object, considering its expected dimensions.

15. System according to claim 14, wherein said fan-like optical curtain is composed of discrete rays that are spatially dense enough to sense an approach of said expected flying object, considering its expected dimensions.

16. System according to claim 14, wherein the size and orientation of the intruding object are measured according to the response of the respective pixels illuminated by reflected or scattered radiation from the intruding object.

## Patentansprüche

1. Optisches System für die Detektion eines fliegenden oder sich bewegenden Objekts, das sich einem Ziel nähert, umfassend:
- eine oder mehrere Sender-Empfänger-Gruppen (110), die an einer Außenfläche einer Wand des Ziels angeordnet sind, wobei jede der Sender-Empfänger-Gruppen umfasst:
a. einen Lichtsender (120) zum Erzeugen eines fächerartigen ebenen oder gekrümmten durchgängigen Lichtvorhangs vor der Wand des Ziels,
b. einen Empfänger (130), der eine zweidimensionale 2D-Focal-Plane-Array (131) umfasst, wobei die Focal-Plane-Array einen Abstand zu dem Sender aufweist und auf einer Ebene angeordnet ist, die nicht parallel zu dem Lichtvorhang verläuft, so dass ein Sichtfeld der Focal-Plane-Array zumindest einen 2D-Abschnitt des gesamten Bereichs des Lichtvorhangs erfasst, und wobei jeder beliebige 2D-Punkt in dem erfassten Bereich des Lichtvorhangs einem bestimmten 2D-Punkt, der ein oder mehrere Pixel umfasst, in der Focal-Plane-Array entspricht; und
- eine oder mehrere Verarbeitungseinheiten zum Bestimmen von zumindest einem Ort des Eindringens des fliegenden oder sich bewegenden Objekts in den Lichtvorhang durch Ermitteln von Pixeln in der Focal-Plane-Array, auf die Reflexionen oder Streuungen aufgrund des Eindringens des fliegenden oder sich bewegenden Objekts einwirken.

2. System nach Anspruch 1, wobei eine Größe des geschützten Zielbereichs an den Vorhangbereich angepasst ist, der von dem Sichtfeld der Focal-Plane-Array erfasst wird.

3. System nach Anspruch 1, wobei jede der Verarbeitungseinheiten jeweils in einer Sender-Empfänger-Gruppe angeordnet ist.

4. System nach Anspruch 1, wobei eine oder mehrere der Verarbeitungseinheiten außerhalb der Sender-Empfänger-Gruppen angeordnet sind.

5. System nach Anspruch 1, wobei die Form des Vorhangerfassungsbereichs am Empfänger über die Auswahl von aktiven und inaktiven Pixeln in der Focal-Plane-Array festgelegt ist.

6. System nach Anspruch 1, wobei eine oder mehrere Sender-Empfänger-Gruppen entlang der Zielwand vorgesehen sind, wobei jede der Gruppen zwei Lichtvorhänge voreinander erzeugt, und wobei ein oder mehrere Empfänger in der Gruppe jeweils die beiden Vorhänge erfassen, und wobei die eine oder mehreren Verarbeitungseinheiten eine Geschwindigkeit und Bewegungsbahn des eindringenden Objekts durch Verarbeiten von zwei Eindringpunkten jeweils in den zwei Lichtvorhängen sowie die zwischen den zwei Eindringvorgängen vergangene Zeit bestimmen.

7. System nach Anspruch 1, wobei der Sender im Dauerstrichbetrieb arbeitet.

8. System nach Anspruch 1, wobei der Sender im Pulsbetrieb arbeitet.

9. System nach Anspruch 8, wobei der Sender in einem abwechselnden AUS-EIN-Modus arbeitet, und wobei der Empfänger Licht akkumuliert während R-Bestimmungszeiträumen, bei denen es sich um Zeiträume handelt, in denen der ausschließlich auf Sonneneinstrahlung zurückzuführende Ladungsgrad in jedem Pixel der Focal-Plane-Array bestimmt wird, beziehungsweise während I-Bestimmungszeiträumen, bei denen es sich um Zeiträume handelt, in denen die Höhe der akkumulierten Ladung aufgrund von Bestrahlung mit dem Sender und Sonneneinstrahlung in jedem Pixel der Focal-Plane-Array bestimmt wird, und wobei die Auswirkungen der Rückstreuung aufgrund von Sonneneinstrahlung oder jeder beliebigen anderen äußeren Strahlungsquelle durch Abziehen eines jeweiligen Signals, das in einem vorangehenden R-Bestimmungszeitraum akkumuliert wurde, von einem Signal, das während eines I-Bestimmungszeitraums akkumuliert wurde, eliminiert werden.

10. System nach Anspruch 9, wobei jeder der I-Bestimmungszeiträume und der R-Bestimmungszeiträume gleich lang dauern.

11. System nach Anspruch 9, wobei jeder der I-Bestimmungszeiträume und der R-Bestimmungszeiträume ungleich lang dauern.

12. System nach Anspruch 8, wobei die Impulsdauer und die Impulswiederholfrequenz auf Grundlage der erwarteten Rate von Änderungen in einem Hintergrundclutter und auf Grundlage der erwarteten möglichen Geschwindigkeit des fliegenden Objekts ausgewählt werden.

13. System nach Anspruch 1, wobei die eine oder mehreren Sender Lasersender in einem bestimmten Laserspektrum sind, und wobei die eine oder mehreren Empfänger gegenüber Licht in dem Laserspektrum empfindlich sind.

14. System nach Anspruch 1, wobei durch das Beleuchten mit dem Lichtvorhang eine Annäherung des erwarteten fliegenden oder sich bewegenden Objekts unter Berücksichtigung seiner erwarteten Abmessungen detektiert werden kann.

15. System nach Anspruch 14, wobei der fächerartige Lichtvorhang aus Einzelstrahlen zusammengesetzt ist, die räumlich dicht genug sind, dass sich eine Annäherung des erwarteten fliegenden Objekts unter Berücksichtigung seiner erwarteten Abmessungen detektieren lässt.

16. System nach Anspruch 14, wobei die Größe und Ausrichtung des eindringenden Objekts als Reaktion darauf gemessen werden, dass die jeweiligen Pixel durch von dem eindringenden Objekt reflektierte oder gestreute Strahlung beleuchtet werden.

## Revendications

1. Système optique pour la détection d'un objet volant ou en mouvement se rapprochant d'une cible, comprenant :
- un ou plusieurs ensembles d'émetteur-récepteur (110) positionnés au niveau d'une surface externe d'une paroi de ladite cible, chacun desdits ensembles d'émetteur-récepteur comprenant :
a. un émetteur de lumière (120) pour créer un rideau optique continu plan ou courbe de type éventail devant ladite paroi de la cible ;
b. un récepteur (130) qui comprend un réseau à plan focal bidimensionnel 2-D (131), ledit réseau à plan focal étant espacé dudit émetteur et étant positionné au niveau d'un plan non parallèle audit rideau optique, de sorte qu'un champ de vision dudit réseau à plan focal recouvre au moins une partie 2-D de la zone entière dudit rideau optique, et dans lequel n'importe quel emplacement 2-D au niveau de la zone couverte du rideau optique correspond à un emplacement 2-D spécifique comprenant un ou plusieurs pixels au niveau dudit réseau à plan focal ; et
- une ou plusieurs unités de traitement pour déterminer au moins un emplacement d'intrusion dudit objet volant ou en mouvement à l'intérieur dudit rideau optique, au moyen de la détermination de pixels à l'intérieur dudit réseau à plan focal qui sont affectés par des réflexions ou des diffusions dues à ladite intrusion dudit objet volant ou en mouvement.

2. Système selon la revendication 1, dans lequel une taille de la zone protégée cible est proportionnelle à la zone de rideau qui est couverte par ledit champ de vision du réseau à plan focal.

3. Système selon la revendication 1, dans lequel chacune desdites une ou plusieurs unités de traitement est positionnée respectivement à l'intérieur d'un ensemble d'émetteur-récepteur.

4. Système selon la revendication 1, dans lequel une ou plusieurs desdites unités de traitement sont positionnées à l'extérieur desdits ensembles d'émetteur-récepteur.

5. Système selon la revendication 1, dans lequel la forme de ladite zone de couverture de rideau est désignée au niveau du récepteur au moyen de la sélection de pixels actifs et inactifs à l'intérieur dudit réseau à plan focal.

6. Système selon la revendication 1, dans lequel un ou plusieurs ensembles d'émetteur-récepteur sont fournis le long de ladite paroi cible, chacun desdits ensembles produisant deux rideaux optiques, l'un devant l'autre, et dans lequel un ou plusieurs récepteurs à l'intérieur dudit ensemble couvrent respectivement lesdits deux rideaux, et dans lequel lesdites une ou plusieurs unités de traitement déterminent une vitesse et une trajectoire dudit objet intrus au moyen du traitement de deux emplacements d'intrusion à l'intérieur respectivement desdits deux rideaux optiques, et des temps écoulés entre lesdites deux intrusions.

7. Système selon la revendication 1, dans lequel l'émetteur fonctionne en onde continue.

8. Système selon la revendication 1, dans lequel l'émetteur fonctionne de manière pulsée.

9. Système selon la revendication 8, dans lequel ledit émetteur fonctionne d'une manière active/inactive en alternance, et dans lequel ledit récepteur accumule une lumière pendant des périodes de détermination R, qui sont des périodes dans lesquelles le niveau de la charge due uniquement au rayonnement solaire dans chaque pixel du réseau à plan focal est déterminé, et des périodes de détermination I, qui sont des périodes dans lesquelles le niveau de la charge accumulée due à l'éclairage de l'émetteur et au rayonnement solaire dans chaque pixel du réseau à plan focal est déterminé, respectivement, et dans lequel les effets de la rétrodiffusion due au soleil ou à toute autre source externe de rayonnement sont éliminés en soustrayant, à un signal accumulé pendant une période de détermination I, un signal respectif qui a été accumulé pendant une période de détermination R précédente.

10. Système selon la revendication 9, dans lequel chacune desdites périodes de détermination I et desdites périodes de détermination R est de temps égal.

11. Système selon la revendication 9, dans lequel chacune desdites périodes de détermination I et desdites périodes de détermination R est de temps inégal.

12. Système selon la revendication 8, dans lequel la durée d'impulsion et la fréquence de répétition d'impulsion sont sélectionnées sur la base de la fréquence attendue de changements d'un encombrement d'arrière-plan, et sur la base des vitesses possibles attendues dudit objet volant.

13. Système selon la revendication 1, dans lequel lesdits un ou plusieurs émetteurs sont des émetteurs laser dans un spectre laser spécifique, et dans lequel lesdits un ou plusieurs récepteurs sont sensibles à la lumière dans ledit spectre laser.

14. Système selon la revendication 1, dans lequel l'éclairage dudit rideau optique permet de détecter une approche dudit objet volant ou en mouvement attendu, en prenant en compte ses dimensions attendues.

15. Système selon la revendication 14, dans lequel ledit rideau optique de type éventail est composé de rayons discrets qui sont suffisamment denses spatialement pour détecter une approche dudit objet volant attendu, en prenant en compte ses dimensions attendues.

16. Système selon la revendication 14, dans lequel la taille et l'orientation de l'objet intrus sont mesurées en fonction de la réponse des pixels respectifs éclairés par un rayonnement réfléchi ou diffusé par l'objet intrus.
